# EUROPEAN PATENT APPLICATION

(11) **EP 0 801 106 A1**
(43) Date of publication of application: **15.10.1997**
(21) Application number: 97105541.3
(22) Date of filing: 03.04.1997
(51) Int. Cl.: C08L 23/28, C08L 23/16, C08L 21/00, B60C 1/00

(54) **Tire with rubber sidewall**

(30) Priority: 12.04.1996 US 635229
(71) Applicant: THE GOODYEAR TIRE & RUBBER COMPANY, Akron, Ohio 44316-0001 (US)
(72) Inventor: Phillips, Terry Russell, Keyser, West Virginia 26726 (US); Mason, Roger Allan, Ridgeley, West Virginia 26753 (US); Eisentrout, Sonya Denise, La Vale, Maryland 21502 (US)
(74) Representative: Leitz, Paul

(57) **Abstract**

A pneumatic rubber tire having an outer rubber sidewall composition containing high molecular weight EPDM, a rubbery copolymer of isobutylene and para-alkylstyrene and at least one additional diene-based rubber.

## Description

### Field

This invention relates to a pneumatic rubber tire having an outer rubber sidewall composition. More specifically, the invention relates to such a tire having an outer rubber sidewall composition of a rubber blend composed of a high molecular weight EPDM and a copolymer of isobutylene and para-alkylstyrene as well as at least one additional diene-based elastomer.

### Background

Pneumatic rubber tires are conventionally composed of a carcass, two spaced apart and relatively inextensible beads, a pair of rubber sidewalls extending radially outward from the region of said beads to a circumferential tread designed to be ground-contacting and a supporting carcass. Such overall tire construction is well known to those skilled in such art.

The outer portions of the rubber sidewalls of rubber tires are exposed to atmospheric conditions and are subject to considerable flexing during the working of the tire under normal operating conditions. Such outer rubber sidewalls, particularly such outer sidewall portions composed of relatively high unsaturation elastomers, may age somewhat prematurely as a result of (i) weathering due to atmospheric conditions and/or (ii) fatigue cracking due to continual flexing under operating conditions.

Rubber sidewall ageing due to weathering may be, for example, a result of exposure to ultraviolet light, ozone and high humidity. Antidegradants are conventionally mixed with the sidewall rubber to counteract such effects. Often low unsaturation rubbers, which are typically more resistant to ageing caused by such exposure such as butyl rubber and EPDM's, are included in or mixed with the relatively high unsaturation elastomer(s) for such purpose.

Fatigue cracking of the sidewall rubber is usually due to continual flexing of the tire sidewall as the tire is run under load at service conditions. Such cracking can first initiate and then can propagate, over time, sometimes to an extent that it penetrates deeper into the tire sidewall and, in some cases, may even penetrate the supporting carcass plies. Sometimes cis 1,4-polybutadiene rubber, a relatively high unsaturation elastomer, is included in the sidewall rubber for a purpose of retarding such cracking.

Tire sidewalls may also prematurely age, or wear, due to scuffing against road curbs or other objects. Rubber is thereby abraded away and a roughened surface results. Excessive scuffing can potentially remove enough rubber so that the underlying and supporting tire carcass may be subject to degradive influences. Often cis 1,4-polybutadiene rubber is included in the sidewall rubber composition to aid in resisting abrasion due to scuffing.

Further, where a tire may be run over rough terrain, for example in an off-the-road service such as in mine operations and in logging operations, growth of a crack, or cut, in the sidewall is a consideration. Often a combination of cis 1,4-polybutadiene and natural rubber is used in the sidewall rubber combination to retard cut growth.

It is known that use of EPDM elastomer (ethylene-propylene-non-conjugated diene monomer derived terpolymer rubber) in a rubber sidewall composition can provide a degree of resistance to ultraviolet and ozone ageing of the sidewall rubber composition.

However, the utility of using EPDM for such purpose is rather limited because of (i) reduced adhesion to adjacent components of the tire as compared to unsaturated, diene-based elastomer compositions, and (ii) reduced dynamic properties, such as reduced hysteresis as compared to unsaturated, diene-based elastomer compositions.

The aforesaid dynamic property(ies) can be partially overcome by using an EPDM of increased molecular weight. However, simply using high concentrations of an EPDM of increased molecular weight in an outer tire sidewall rubber composition is considered to be disadvantageous because hysteresis and adhesion are considered herein to be adversely affected when using relatively high concentrations of such EPDM's in tire sidewall rubber compositions.

### Disclosure and Practice of the Invention

In accordance with this invention, a pneumatic rubber tire is provided having an outer rubber sidewall where the outer sidewall layer is a sulfur cured rubber layer composition comprised of, based on 100 parts by weight rubber (phr), (a) about 5 to about 25 phr of a high molecular weight EPDM, as a rubbery terpolymer of ethylene, propylene and a minor amount of a non-conjugated diene, having a molecular weight in a range of about 500,000 to about 1,000,000, alternatively about 500,000 to about 800,000; (b) about 20 to about 50 phr of a rubbery post-halogenated copolymer of iso-olefin and para-alkylstyrene; and (c) about 25 to about 75 phr or at least one additional diene-based elastomer; wherein, for said post-halogenated copolymer, said iso-olefin contains from 4 to 7 carbon atoms and the alkyl constituent of said para-alkylstyrene has from 1 to 11 carbon atoms.

In the practice of this invention, it is preferred that the tire outer sidewall rubber is a black colored rubber composition containing reinforcing carbon black colorant and does not contain, or is exclusive of, staining antioxidants such as, for example, para-phenylene diamine. Black colored tire outer sidewalls colored by normal inclusion of carbon black reinforcement are well known to those skilled in such art. Also, antioxidants which may tend to stain a non-black colored outer sidewall, such as white colored sidewalls colored with titanium dioxide in the absence of carbon black reinforcement are sometimes referred to staining antioxidants and are well known to those having skill in such art. Staining antioxidants usually used in conventional black colored tire outer sidewalls, particularly when they are composed of high unsaturation rubbers and it is to be appreciated by those having skill in such art, that some staining would be expected to occur in such conventional rubber sidewall compositions.

Preferably, said post-halogenated copolymer of iso-olefin and para-alkylstyrene is a brominated copolymer of isobutylene and para-methystyrene, wherein said copolymer contains about 85 to about 98 weight percent isobutylene and wherein said brominated copolymer contains about 0.2 to about 2.5 weight percent bromine.

Said additional rubber for said sidewall may be selected from, for example, at least one of natural and/or synthetic cis 1,4-polyisoprene rubber, cis 1,4-polybutadiene rubber, styrene/butadiene copolymer rubber, styrene/isoprene/butadiene terpolymer rubber, 3,4-polyisoprene rubber and trans 1,4-polybutadiene containing at least 70 percent trans 1,4-structure.

Preferably such additional rubber is selected from at least one of cis 1,4-polyisoprene rubber (natural or synthetic rubber, preferably natural rubber) and cis 1,4-polybutadiene rubber.

The EPDM for the sidewall of this invention is a rubbery terpolymer of ethylene, propylene and a minor amount, usually about 6 to about 19 weight percent, of a non-conjugated diene. EPDM terpolymer elastomers are well known to those skilled in such art. Typical non-conjugated diene used are those such as, for example, ethylidene norbornene, 1,4-hexadiene, and dicyclopentadiene. The ethylene and propylene units in the rubbery terpolymer may, for example, be in a ratio range of about 2/1.

In this invention, a relatively high molecular weight EPDM, as compared to a more conventional EPDM's, is used in similar amounts in order to improve adhesion of the tire sidewall rubber composition to adjacent components of the tire and dynamic flex properties. The molecular weight of the high molecular weight EPDM terpolymer elastomer, namely about 500,000 to about 1,000,000, alternatively about 500,000 to about 800,000, can be conveniently be determined by gel permeation chromatography as is well known to those having skill in such art.

The rubbery copolymer of post-halogenated isobutylene and para-alkylstyrene for this application is a copolymer comprising repeat units from an iso-olefin and para-alkylstyrene. This copolymer is desirably post-brominated as recited below. The iso-olefins may have from 4 to 7 carbon atoms (e.g. isobutylene). Isobutylene is the preferred iso-olefin for the copolymer. The alkyl constituent of the para-alkylstyrene may have from 1 to 11 carbon atoms. Preferably, para-methystyrene is the para-alkylstyrene. Desirably, the para-alkylstyrene is at least about 80, 90, or at least about 95 weight percent or more para-methystyrene. Desirably the copolymer is from about 1 to about 20 weight percent para-methystyrene, and more desirably from about 2 to about 15 weight percent para-methystyrene. Desirably the copolymer is from about 80 to about 99 weight percent isobutylene and more desirably from about 85 to about 98 weight percent.

Desirably the above copolymer is post-halogenated (e.g. brominated) copolymer with a halogen (e.g. bromine) content up to about 5 weight percent and preferably from about 0.2 to about 1.5 or up to about 2.5 weight percent in the copolymer. Post-halogenation with other halogens (e.g. chlorine) is less preferred. Conjugated diene monomers having 4 to 8 carbon atoms may optionally be present in amounts up to about 5 or about 8 weight percent, and more desirably from about 0.5 to about 3 weight percent of the copolymer. The preferred copolymer of isobutylene and para-methystyrene is essentially free of isoprene and other conjugated dienes (i.e. less than 1 percent or less than 0.2 percent by weight of the polymer).

A preferred copolymer is post-brominated copolymer of isobutylene and para-methystyrene obtainable as "Exxpro™" from the Exxon Chemical Company reportedly having a Mooney Viscosity ML (1+8) 125°C of 50 ± 10, an isobutylene content of about 94 or 95 weight percent, and a para-methystyrene content of about 5 weight percent, with a total bromine content of about 0.8 weight percent. A European Patent Application having Publication No. 0.344,021 describes how to make such above polymers.

It is considered herein that a benefit of such post-brominated isobutylene/para-methystyrene copolymer when used in combination with the high molecular weight EPDM is to provide a tire sidewall appearance lasting an extended period of time during normal use of the tire. Representative of such tire sidewall appearance considerations are relatively non-discoloring, or staining, properties.

It is readily understood by those having skill in the art that the rubber compositions of the sidewall would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical additions of carbon black may comprise about 20 to about 80 parts by weight per 100 parts by weight of diene rubber (phr), preferably about 30 to about 50 phr. Typical amounts of tackifier resins, if used, may comprise about 0.5 to about 10 phr, usually about 1 to about 5 phr. Typical amounts of processing aids may comprise about 1 to about 20 phr. Such processing aids can include, for example, aromatic, napthenic, and/or paraffinic processing oils. Silica, if used, may be used in an amount of about 5 to about 25 phr, often with a silica coupling agent. Representative silicas may be, for example, hydrated amorphous silicas. Typical amounts of antioxidants comprise about 1 to about 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise about 1 to about 5 phr. Typical amounts of fatty acids, if used, which can include stearic acid comprise about 0.5 to about 3 phr. Typical amounts of zinc oxide comprise about 2 to about 6 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of specified blends of rubbers in tire sidewalls as sulfur vulcanizable compositions.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 4 phr, with a range of from about 0.5 to about 2.25 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from about 0.5 to about 2.0 phr. In another embodiment, combinations of two or more accelerators are used in which the primary accelerator is generally used in the larger amount (0.5 to 2 phr), and in which a secondary accelerator is used in a smaller amount (0.05-0.50 phr), in order to activate and to improve the properties of the vulcanizate. Combinations of these accelerators have been known to produce a synergistic effect on the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the utilization of specified blends of rubbers in tire sidewalls, particularly the inclusion of the trans polybutadiene in the sidewalls.

Sometimes, the combination of zinc oxide, fatty acid, sulfur and accelerator(s) may be collectively referred to as "curatives".

Sometimes a combination of antioxidants, antiozonants and waxes may be collectively referred to as "antidegradants".

The tire can be built, shaped, molded and cured by various methods which will be readily apparent to those having skill in such art.

The prepared tire of this invention is conventionally shaped and cured by methods known to those having skill in such art.

The invention may be better understood by reference to the following example in which the parts and percentages are by weight unless otherwise indicated.

### EXAMPLE I

Rubber compositions, black in color by the use of carbon black reinforcement, were prepared as being composed of mixtures of diene rubber(s) with high molecular weight EPDM and brominated isobutylene/para-methystyrene copolymer and comprised of the recipe shown in Table 1 and referred to herein as Experiment B (Exp B). Experiment A is considered a control and is the same as Exp B except that no high molecular weight EPDM is used in the rubber composition.

**Table 1**

| Material | Parts Exp A (Control) | Parts Exp B |
|---|---|---|
| Rubber¹ | 10 | 40 |
| Rubber² | 50 | 10 |
| Rubber³ | 40 | 30 |
| Rubber⁴ | 0 | 20 |
| Carbon Black⁵ | 50 | 50 |
| Process oil (napthenic) | 12 | 10 |
| Curatives⁶ | 7.6 | 5.3 |
| Conventional, preferred, typical, amounts of fatty acid (stearic acid), zinc oxide, sulfur and accelerator of the sulfenamide type (curatives) were used. | | |

| | | |
|---|---|---|
| 1. Natural rubber (cis 1,4-polyisoprene rubber). | | |
| 2. Cis 1,4-polybutadiene rubber obtained as Bud 1207™ from The Goodyear Tire & Rubber Company. | | |
| 3. A rubbery post-brominated copolymer of isobutylene and para-methystyrene obtained as Exxpro™ from the Exxon Chemical Company, reportedly having a Mooney Viscosity ML (1+8) 125°C of 50 ± 10, an isobutylene content of about 94 to about 95 weight percent, and a para-methystyrene content of about 5 weight percent, with a total bromine content of about 0.8 weight percent. | | |
| 4. An EPDM terpolymer rubber obtained as X3114 from the Uniroyal Rubber Company, reportedly being an EPDM having a molecular weight of about 500,000 to about 600,000 and composed of units derived from ethylene, propylene and a minor amount of ethylidine norbornene. | | |
| 5. N-660 carbon black. | | |
| 6. Sulfur and sulfenamide type of cure accelerators. | | |

### EXAMPLE II

The prepared rubber compositions were cured at a temperature of about 150°C for about 18 minutes and the resulting cured rubber samples evaluated for their physical properties as shown in the following Table 2. The experimental sample B and the Control sample A correspond to the samples A and B of Example I.

**Table 2**

| Properties | Exp A (Control) | Exp B |
|---|---|---|
| | | |

| Rheometer¹ (150°C) | | |
|---|---|---|
| (a) Max Torque (dN-m) | 6.9 | 8.8 |
| (b) Max Torque (dN-m) | 22.5 | 20.8 |

| Stress-Strain | | |
|---|---|---|
| (a) 300% Modulus (MPa) | 3.3 | 4.0 |
| (b) Tensile Strength (MPa) | 11.5 | 10.7 |
| (c) Elongation (%) | 800 | 650 |
| Tear² (N/cm) (strebler @ 23°C) | 11.9 | 13.2 |
| Flex-to-fail³ (cm) | 1.8 | 0.84 |

| | | |
|---|---|---|
| 1. Torque applied by an oscillating disk to uncured rubber samples which cures during the test. | | |
| 2. Force required to pull apart a 5 mm wide strip of the rubber composition of Control Exp A or Exp B, as the case may be, from a 5 mm wide strip of rubber tire carcass rubber composition (180° pull). Such test is believed to be well known to those skilled in such art and is considered herein to be a measure of adherence, or adhesion, of the rubber outer sidewall composition(s) to the tire carcass composition. | | |
| 3. Dynamic test performed on Dematta Flex cured rubber samples by continuous flexing at about six Hertz (ASTM D813-95). The property is expressed in centimeters of the length of crack propagation after 100 hours of the test. Such test is believed to well known to those having skill in such art. | | |

The properties of the cured rubber composition B are somewhat comparable to the Control Exp. A, except that the adhesion property, as exemplified by the above tear resistance property expressed in newtons per centimeter, is substantially improved. This is considered herein to show that the Exp B outer rubber sidewall composition represents a higher resistance to separation from a tire carcass composition used in the test which is considered herein as being beneficial because it promotes greater tire outer sidewall durability for the tire.

Although the mechanism may not be completely understood, it is believed that the adhesion property improvement is, at least in part, due to use of the higher molecular weight EPDM as compared to more conventional, lower molecular weight, EPDM's.

This Example shows that the use of a combination of high molecular weight EPDM together with the brominated isobutylene/para-methystyrene copolymer (Exp B) provides improved adhesion and flex resistance as evidenced by "Tear" test values and the " Flex-to-fail" test values, respectively, shown in Table 2, as compared to a similar sidewall rubber composition utilizing a brominated isobutylene/para-methystyrene copolymer without the high molecular weight EPDM (Control Exp A).

### EXAMPLE III

Pneumatic rubber tires were prepared having rubber sidewalls composed of the rubber compositions of Control A and Exp B, respectively. Tire sidewalls were observed to have properties, as compared to values for the Control A tire, which had been normalized to values of 100, as shown in the following Table 3. The Exp B tire had a sidewall rubber composition of the compositions of Exp B of Example I.

**Table 3**

| Property | Tire | |
|---|---|---|
| | Exp A (Control) | Exp B |
| High speed test | 100 | 102 |
| Aged ozone wheel | 100 | 116 |
| Rolling resistance | 100 | 96 |

The above "high speed test" property is a dynamic property and a visually observed aspect of the tire sidewall after the tire is mounted on a rim, inflated and mounted on a test wheel and driven, under load, against another wheel of a diameter of about 67 inches (170 cm) at an increasing speed of from about 50 mph to about 149 mph (about 81 to about 193 km/h), or failure, whichever first occurs. In this test the tires lasted for about eight hours, with the tire of Exp B lasting about 2 percent longer. A higher value for this test is a visual observation of integrity of the tire outer sidewall and is considered to be better for tire outer sidewall applications. Such test is believed to be well known to those having skill in such art.

The above "aged, ozone wheel" property is determined by mounting a tire on a rim, inflating the tire, and the resulting tire/rim assembly placed in an enclosed room at a temperature of about 21 to about 32°C. and elevated ozone conditions and continuously rotated for a maximum of about 300 hours, or failure, whichever first would occur. In this case, the tires eventually failed prior to 300 hours as the sidewalls exhibited accelerated, extensive surface degradation and failure to an extent that air leaked from the tires and the tires then deflated. A higher value is representative of an observed better ozone resistance for the tire outer sidewall rubber composition and is considered to be better for tire outer sidewall applications.

The above "rolling resistance" property is determined by mounting the tire on a rim and inflating the tire. The resulting tire/rim assembly is submitted to a wheel test in which the tire is run under load and the rolling resistance coefficient is measured, or observed by a biaxial load cell. A lower value is considered to be better for the tire, namely, representative of an anticipated lower rolling resistance and greater vehicular fuel economy.

Thus, it is considered herein that the utilization of a combination of the high molecular weight EPDM together with the brominated isobutylene/para-methystyrene copolymer for a tire sidewall (Exp B), as compared to a similar tire with a sidewall utilizing the brominated isobutylene/para-methystyrene copolymer without the high molecular weight EPDM (Control Exp A) is beneficial for outer tire sidewall purposes because of the observed benefits in Table 3 of the described tire performance characteristics. These properties are considered herein to be particularly beneficial for tire outer sidewalls because the aforesaid tire outer sidewall rubber composition performance as well as visual enhancements.

The tire with a sidewall of the rubber composition of Exp B, as compared to the tire with a sidewall or the rubber composition of Control Exp A, exhibited a comparatively good tire sidewall appearance. For these observations "good tire sidewall appearance" relates to a tire sidewall which stays black in color and substantially retains a relatively new tire sidewall appearance over many miles of vehicular travel under typical driving conditions, particularly as it is considered herein, in comparison to a black tire sidewall composition composed of a high unsaturation rubber, without the EPDM, which would be expected to contain a staining, para-phenylenediamine antioxidant.

While certain representative embodiments and details have been shown for the purpose of illustrating the invention, it will be apparent to those skilled in this art that various changes and modifications may be made therein without departing from the spirit or scope of the invention.

## Claims

**1.** A pneumatic rubber tire having an outer rubber sidewall where the outer sidewall layer is a sulfur cured rubber layer composition characterized by being comprised of, based on 100 parts by weight rubber (phr), (a) 5 to 25 phr of a high molecular weight EPDM, a rubbery terpolymer of ethylene, propylene and a minor amount of a non-conjugated diene, having a molecular weight in a range of 500,000 to 1,000,000; (b) 25 to 50 phr of a rubbery post-halogenated copolymer of iso-olefin and para-alkylstyrene; and (c) 25 to 75 phr of at least one additional diene-based elastomer; wherein, for said post-halogenated copolymer, said iso-olefin contains from 4 to 7 carbon atoms and the alkyl constituent of said para-alkylstyrene has from 1 to 11 carbon atoms.

**2.** The tire of claim 1 characterized in that, for said sidewall layer, (i) said EPDM is a rubbery terpolymer of ethylene and propylene containing 6 to 19 percent of a non-conjugated diene and (ii) said additional diene-based elastomer is selected from at least one of cis 1,4-polyisoprene rubber, cis 1,4-polybutadiene rubber, styrene/butadiene copolymer rubber, styrene/isoprene/butadiene terpolymer rubber, 3,4-polyisoprene rubber and trans 1,4-polybutadiene containing at least 70 percent trans 1,4-structure.

**3.** The tire of any of the preceding claims characterized in that, for said sidewall layer, (i) said post-halogenated copolymer is a post-brominated copolymer of isobutylene and para-methystyrene, where said copolymer contains 85 to 98 weight percent isobutylene and said post-brominated copolymer contains 0.5 to 2.5 weight percent bromine and (ii) said additional diene-based elastomer for said outer sidewall is selected from at least one of cis 1,4-polyisoprene rubber, cis 1,4-polybutadiene rubber, styrene/butadiene copolymer rubber, styrene/isoprene/butadiene terpolymer rubber, 3,4-polyisoprene rubber and trans 1,4-polybutadiene containing at least 70 percent trans 1,4-structure.

**4.** The tire of any of the preceding claims characterized in that, for said sidewall layer, said post-halogenated copolymer is a brominated copolymer of isobutylene and para-methystyrene, wherein said copolymer contains 85 to 98 weight percent isobutylene and wherein said brominated copolymer contains 0.2 to 2.5 weight percent bromine.

**5.** The tire of claim 4 characterized in that, for said sidewall layer, said post-brominated copolymer of isobutylene and para-methystyrene also contains from 0.2 to 3 weight percent of conjugated post-brominated copolymer contains less than 1 percent of said conjugated diene(s).

**7.** The tire of any of the preceding claims characterized in that, for said sidewall layer, said additional diene-based rubber is selected from at least one of cis 1,4-polyisoprene rubber and cis 1,4-polybutadiene rubber.

**8.** A pneumatic rubber tire having an outer rubber sidewall layer where the outer sidewall layer is a sulfur cured rubber layer composition characterized by being comprised of, based on 100 parts by weight rubber (phr), (a) 5 to 25 phr of a high molecular weight rubbery EPDM having a molecular weight in a range of 500,000 to 800,000 as a terpolymer of ethylene and propylene containing 6 to 19 weight percent of a non-conjugated diene; (b) 20 to 50 phr of a rubbery post-brominated copolymer of isobutylene and para-methystyrene, where said copolymer contains 85 to 98 weight percent isobutylene and said post-brominated copolymer contains 0.5 to 2.5 weight percent bromine and (c) 10 to 30 phr of at least one additional diene based elastomer selected from at least one of cis 1,4-polyisoprene rubber, cis 1,4-polybutadiene rubber, styrene/butadiene copolymer rubber, styrene/isoprene/butadiene terpolymer rubber, 3,4-polyisoprene rubber and trans 1,4-polybutadiene containing at least 70 percent trans 1,4-structure.

**9.** The tire of claim 8 characterized in that (i) said non-conjugated diene for said EPDM terpolymer rubber is ethylidene norbornene and (ii) said additional diene-based rubber is selected from at least one of cis 1,4-polyisoprene natural rubber and cis 1,4-polybutadiene rubber.
